# EUROPEAN PATENT APPLICATION

(11) **EP 1 380 553 A1**
(43) Date of publication of application: **14.01.2004**
(21) Application number: 02015343.3
(22) Date of filing: 10.07.2002
(51) Int. Cl.: C03C 17/42, C03C 17/38

(54) **Glazing panel**

(71) Applicant: Glaverbel, 1170 Bruxelles (Watermael-Boitsfort) (BE)
(72) Inventor: The designation of the inventor has not yet been filed
(74) Representative: Farmer, Guy

(57) **Abstract**

A protective coating is used in heat treating a coated glazing panel.

## Description

This invention relates to glazing panels and particularly, but not exclusively, to low emissivity glazing panels which are intended to undergo heat treatment following application of a low emissivity filter.

Optical filters, often applied to glass substrates in the form of transparent coating stacks, may be used to regulate the optical and thermal properties of glazing panels. However, such coating stacks may be susceptible to damage during manufacturing of the glazing panels, for example during handling and transportation of the glazing panels and particularly during heat treatment of the glazing panels which may be desirable to heat strengthen, harden, temper or bend the coated glazing panel. Furthermore, the presence of the transparent coating, particularly a low emissivity coating, may render heat treatment more difficult, particularly in maintaining the glazing panel flat or planar during and once heat treated and in having acceptable properties in the coating stack after heat treatment.

According to one aspect, the present invention provides a method as defined in Claim 1.

According to further aspects, the present invention provides glazing panel as defined in Claim 10 and Claim 11.

Dependant claims define further preferred embodiments of the invention.

The protective coating need not be an organic or acrylic paint; it may be, for example, a paint, an organic resin, an organic coating, an aqueous emulsion, a solution of synthetic rubbers and/or synthetic resins. The protective coating may comprise a solvent, particularly an organic solvent; it may comprise a pigment or, alternatively, be substantially free of pigments. The protective coating may be in a state of partial but not total polymerisation.

The protective coating may be applied to the glazing panel in liquid form ; it may be applied, for example, by spraying or by curtain wall coating. The protective coating may cover the entire surface or substantially the entire surface of the glazing panel and/or the transparent coating ; it may provide a substantially continuous and/or substantially uniform covering.

The protective coating may have a thickness of greater than or equal to 15µ, 20µ, 25µ, 30µ, 40µ or 50µ ; it may have a thickness of less than or equal to 200µ, 150µ, 120µ, 100µ, 80µ, 65µ, 50µ or 40µ.

The glass sheet may have a thickness of from 1-3mm, from 2-5mm, from 4-9mm or more.

The heat treatment process may comprise a bending and/or a tempering and/or hardening operation. The term "heat treatable glazing panel" as used herein means that the glazing panel carrying the coating stack is adapted to undergo a bending and/or thermal tempering and/or thermal hardening operation without the haze of the so treated glazing panel exceeding 0.5, and preferably without the haze exceeding 0.3. The term "substantially haze free heat treated glazing panel" as used herein means a glazing panel which has been bent and/or thermally tempered and/or thermally hardened and has a haze that does not exceed 0.5 and which preferably does not exceed 0.3. The heat treatment, particularly in the case of a bending operation may be carried out at a temperature of at least 600 °C, 620°C or 640°C for at least 6 minutes, 10 minutes, 12 minutes, or 15 minutes. In the case particularly of a tempering and/or hardening operation, the heat treatment may be carried out at a temperature of at least 600°C, 620°C, 640°C, 650°C, 660°C, 670°C, 680°C or 690°C for a duration which may be greater than or equal to 1,2,3,4,5,6,7,8,9 or 10 minutes and which may be less than or equal to 4,5,6,7,8,9,10,12 or 15 minutes. The heat treatment process may comprise directing a fluid, for example air at ambient temperature, over the heated glazing panel so as to rapidly cool it.

The degradation of the protective coating during the heat treatment process may be accompanied by the evaporation and/or combustion of constituents of the protective coating. The degradation may transform the protective coating into a powder and/or render the protective coating more easily removable from the glazing panel. The degradation may be at least partial; the protective coating may be substantially or entirely degraded during the heat treatment.

Removing traces of the protective coating may comprise one or more of wiping, brushing, blowing, vacuuming and washing the glazing panel.

The transparent coating may be, for example, an infra red reflecting coating, a low emissivity coating or a solar control coating. It may comprise a plurality of coating layers. The transparent coating may be deposited on the glass substrate by, for example, liquid pyrolysis, chemical vapour deposition, vacuum deposition and sputtering, particularly magnetron sputtering. The invention is particularly suitable for use with sputtered low emissivity coatings comprising a metallic infra red reflecting layer (eg silver or a silver alloy) sandwiched between dielectric layers (eg oxides or nitrides)

The protective coating may provide mechanical and/or chemical protection to the transparent coating during transportation, storage, processing (for example cutting, edge grinding) and handling of the glazing panel. Additionally or alternatively, the protective coating may facilitate the heat treatment operation, for example by rendering the glazing panel less reflective to infra red radiation than would otherwise be the case (eg so that it has a higher emissivity) and thus facilitating radiative heating of the glazing panel during heat treatment. The protective coating may facilitate maintaining the glazing panel relatively flat or planar during a tempering or hardening heat treatment (for example so that the coated glazing panel acts in the same or substantially similar way to a non-coated glazing panel of equivalent thickness during tempering or hardening) so as to facilitate manufacture of a substantially planar heat treated glazing panel and/or may facilitate obtaining acceptable properties in the transparent coating after heat treatment. The glazing panels comprising the protective coating may having improved storage properties; they may be stored, stacked together without an intervening powder or separator.

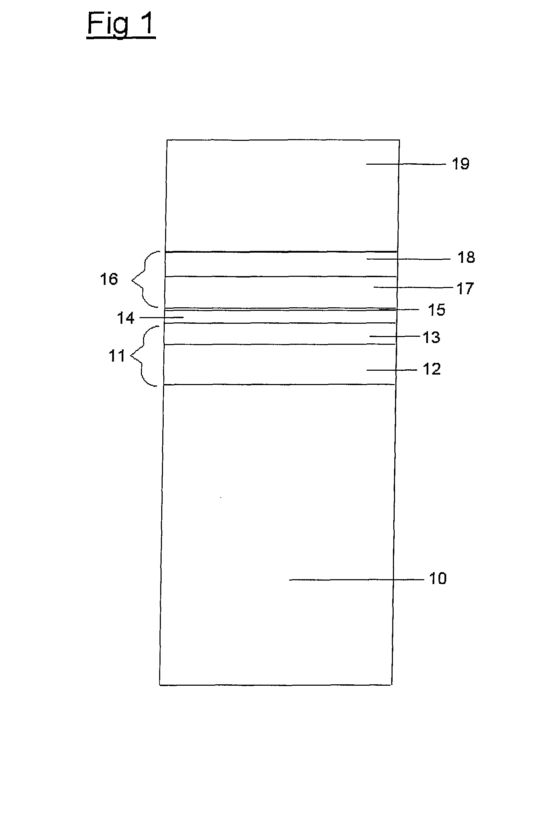

An example of the present invention will now be described with reference to Fig 1 which is a cross-section through a glazing panel prior to a tempering operation (for ease of representation, the relative thickness of the glazing panel and coating layers are not shown to scale).

Fig 1 shows a heat treatable, transparent coating deposited on a glass substrate by magnetron sputtering and having the following sequential structure:

| | Reference number | Geometrical thickness |
|---|---|---|
| Glass substrate | 10 | 6 mm |
| Base dielectric comprising: | 11 | |
| Aluminium nitride | 12 | 100 Å |
| Zinc oxide containing 5% aluminium | 13 | 200 Å |
| Silver containing 1% palladium | 14 | 100 Å |
| overlying barrier comprising a mixture of zinc with 5% aluminium | 15 | 15Å |
| Top dielectric comprising: | 16 | |
| Zinc oxide containing 5% aluminium | 17 | 150 Å |
| Silicon nitride | 18 | 170 Å |
| Latex paint | 19 | 50 microns |

At least a portion of the overlying barrier 15 is oxidised during deposition of the overlying oxide layer. Nevertheless, a portion of this barriers preferably remains in metallic form, or at least in the form of an oxide that is not fully oxidised to provide a barrier for subsequent heat treatment of the glazing panel.

This glazing panel is significantly more resistant to mechanical abrasion of the transparent coating layer during storage and handling than a similar glazing panel which does not have the protective coating. The glazing panel may be tempered by being heat treated in a standard tempering furnace, for example a radiative or a combined convection and radiative tempering furnace having substantially the same settings as would be used for an equivalent uncoated glass sheet. Indeed, the glazing panel may behave in substantially the same way as an uncoated glass sheet during the heat treatment process. The furnace may have a substantially uniform heating configuration; it may be a tempering furnace without a heat balance system. During the heat treatment process, the protective coating, which may be regarded as a temporary protective coating, may burn or combust. In the case of the example, the latex paint in transformed into an absorbent powder during the initial stages of the heat treatment process, in particular during the period between 30 seconds and 80 seconds into the heat treatment.

This particular glazing panel is intended for architectural applications and has the following properties:

| Property | Following heat treatment ^{see Note 1 below} | When assemble in a double glazing^{see Note 2 below} |
|---|---|---|
| Light transmission (Illuminant A) | 84% | 75% |
| Emissivity | 0.06 | |
| L | 25 | 36 |
| a | 0 (coated side) | 0 (external) |
| b | -12 (coated side) | -6 (external) |

| | | |
|---|---|---|
| Note 1: Measured from the transparent coating side following tempering at 625° C for about 3 minutes | | |
| Note 2: assembled in a double glazing unit with a 6mm sheet of clear glass, the coating in position 3 | | |

Additional layers may be introduced above, below or between the film stacking of the transparent coating arrangement if desired without departing from the invention. In particular, an additional barrier layer, which may be metallic, may be introduced below the infra red reflecting or silver containing layer.

Optical and thermal properties of the glazing may be adjusted as is known in the art by adjusting the thickness of the dielectric layers and/or silver layer(s).

## Claims

1. A method of manufacturing a heat treated coated glazing panel comprising the steps of:
providing a coated glazing panel comprising a sheet of glass, a transparent coating supported at at least one of the major surfaces of the sheet of glass and a protective coating comprising an organic or acrylic paint covering the transparent coating;
subjecting the coated glazing panel to a heat treatment process in a furnace at a temperature of at least 550°C ;
causing at least partial degradation of the protective coating during the heat treatment process .

2. A method in accordance with claim 1, comprising the additional step of subsequently removing traces of the protective coating following the heat treatment process.

3. A method in accordance with claim 1 or claim 2, in which during heat treatment, the protective coating is transformed into a powder, preferably a powder which is absorbent with respect to infra red radiation.

4. A method in accordance with any preceding claim, in which the heat treatment process comprises tempering the glazing panel.

5. A method in accordance with claim 4 in which tempering is carried out in a furnace without the use of a heat balance system.

6. A method in accordance with any preceding claim, in which the step of subsequently removing traces of the protective coating comprises treating the glazing panel in an industrial glass washing machine.

7. A method in accordance with any preceding claim, in which the transparent coating is an infra red reflecting coating.

8. A method in accordance with any preceding claim, in which the glazing panel is a heat treatable glazing panel.

9. A method in accordance with any preceding claim, in which the transparent coating is a sputter deposited coating and comprises a metal silver containing layer having a thickness of between 5nm and 30nm sandwiched between dielectric layers.

10. A heat treatable glazing panel comprising, in order :
a glass sheet;
a transparent, infra red reflective coating layer ; and
a protective coating comprising a layer of organic or acrylic paint.

11. A substantially haze free heat treated glazing panel comprising, in order:
a glass sheet;
a transparent, infra red reflecting coating layer deposited on the glass sheet prior to heat treatment ;and
traces of a layer of organic or acrylic paint.
